Europäisches Patentamt

European Patent Office

Office européen des brevets

(19)

(11) Publication number : **0 522 788 A1**

# (12) EUROPEAN PATENT APPLICATION

(21) Application number : 92306094.1

(22) Date of filing : 01.07.92

(51) Int. Cl.⁵ : **C09J 7/02**

(30) Priority : **08.07.91 US 726611**

(43) Date of publication of application :
**13.01.93 Bulletin 93/02**

(84) Designated Contracting States :
**AT BE CH DE DK ES FR GB GR IT LI LU MC NL PT SE**

(71) Applicant : **ROHM AND HAAS COMPANY**
**Independence Mall West**
**Philadelphia Pennsylvania 19105 (US)**

(72) Inventor : **Choi, Chol-Yoo**
**42 Saddlebrook Drive**
**North Wales, Pennsylvania 19454 (US)**

(74) Representative : **Harding, Charles Thomas et al**
**Rohm and Haas (UK) Ltd., European Operations Patent Dept., Lennig House, 2 Masons Avenue**
**Croydon CR9 3NB (GB)**

(54) Printable, pressure sensitive adhesive article.

(57)   An article is descibed comprising a backing layer, at least one pressure sensitive adhesive layer, and an aqueous release coating layer, wherein the pressure sensitive adhesive layer is affixed to at least one side of the backing layer and the aqueous release coating layer comprises an aqueous solution of water-soluble or water-dispersible poly(alkylene-oxide)-containing polymer.

EP 0 522 788 A1

The present invention relates to a printable, pressure sensitive adhesive article.

In particular, the present invention relates to an article containing a backing, a pressure sensitive adhesive and a release coating.

Pressure sensitive adhesives have widespread use as bonding agents for films, foil, and paper for tapes, labels and decals. Films, foil, and paper for tapes, labels and decals will be hereafter referred to as "backing". The adhesive may be coated onto one or both sides of the backing. The side of the backing coated with adhesive will be referred to hereafter as the "adhesive-coated backing side".

In tapes, for example, the adhesive-coated backing is typically wound onto itself to form a roll where the adhesive-coated backing side is in direct contact with the upper surface of the contiguous backing layer in the roll which typically does not contain adhesive. The side of the backing not coated with adhesive is typically coated with a material which functions as a release agent. This side will be referred to hereafter as the "release-coated backing side".

In certain cases, both sides of the backing may be coated with adhesive and a release-coat paper containing a separate backing and a release coating may be applied onto one or both sides of these adhesive-coated backing sides. Hereinafter a backing having both sides coated with adhesive will be referred to as "double adhesive coated backing" and the side or sides which contain the release-coat paper will be referred to as the "release-coated paper side. "

It is desirable that the adhesive releases cleanly from the release-coated backing side or release-coated paper side without causing damage or leaving any adhesive residue on the release-coated backing side or release-coated paper side.

Forming rolls from the adhesive-coated backing imposes an additional requirement on the adhesive, namely a differential affinity of the adhesive for the two sides of the backing, such that the adhesive preferentially adheres to the coated backing side with no subsequent transfer to the uncoated backing side of the adjacent layer when the backing is unrolled.

There are two methods which result in differential affinity of the adhesive towards the two sides of the backing -- the primer coating method and the release coating method.

In the primer coating method, an adhesive is selected which does not adhere to the backing and a primer coat is used to make the adhesive bond to the backing. The primer coat is first applied to the backing and then the adhesive is applied onto the primer coat. When the adhesive-coated backing is rolled, the adhesive on the adhesive-coated backing side contacts the backing side, which does not contain adhesive, but does not adhere to it. Examples of this method are solventbased natural rubber adhesives coated on unplasticized polyvinyl chloride film and aqueous-based acrylic adhesives coated on oriented polypropylene film where the coated backing side has been "primed" by corona discharge treatment.

In the release coating method, a release coat is applied to the backing side which does not contain adhesive ("release-coated backing side") and an adhesive is applied the opposite backing side ("adhesive-coated backing side"). The release coat has a strong affinity for the backing but a weak affinity for the adhesive. Release coats are typically used with solvent-based natural rubber adhesives and hot-melt block copolymers coated on oriented polypropylene film.

Alternatively, a release coating may alternatively may be applied to a separate backing which is subsequently applied to the adhesive-coated side of the backing (hereinafter referred to as "release-coat paper.")

There are several requirements which a coating must meet to function as a release coating.

It must exhibit low affinity toward the adhesive with which it will directly contact when the backing is wound into a roll. This low affinity must be maintained over time and under temperature and humidity fluctuations and extremes. However, the release coating must not reduce the adhesive bonding between the backing and the adhesive to such an extent that the roll "telescopes. " The release coating must also strongly bond to the backing side so that it does not delaminate when aggressive adhesives are used. Further, components of the release coating must not migrate into the adhesive, thereby deteriorating the properties of the adhesive.

It is also desirable to have a backing which is directly printable with flexographic ink, gravure ink and the like. Typically the release coating hinders the adhesion of the printing medium to the backing. In addition, the ink must not be removed by the adhesive in contact when the backing is rolled or unrolled. Efforts to enhance the anchoring of the printing medium to the backing normally have a deleterious effect on the performance properties of both the adhesive and release coating.

It is also desirable for safety, health and environmental reasons to use a release coat which is aqueous-based. Aqueous-based release coatings exist which may be coated onto hydrophobic films, such as for example polyester, polypropylene and polyvinyl chloride. These release coatings are, however, not printable.

Several patents teach compositions useful as release coats on tape backing. For example, US-A-2,532,011 discloses the use of polyvinyl alkyl carbamate composition as a low adhesion coating. US-A-2,607,711 discloses the use of higher alkyl acrylates and methacrylates as low adhesion backsize coatings. US-A-3,318,852 discloses the use of fluorine-containing polymers as a release agent at elevated temperatures. US-A-3,475,196 discloses a pressure sensitive adhesive tape containing a backing, a pressure sensitive adhesive and a poly-N-acyl-imine release coating agent.

Others have attempted to produce coatings that permit printing without sacrificing release properties. Several patents are directed towards printable release coats where the release coats are blended with ink-anchoring resins. US-A-3,967,031 teaches a pressure-sensitive adhesive tape having a backsize containing cellulose acetate butyrate, copolyester and / or acrylate copolymer and polyester urethane. The tape with a solvent-based rubber adhesive exhibits both printability and low unwind characteristics. US-A-4,070,523 teaches a solvent-based release coat, a blend of poly-ketone resin and an octadecyl urea of polyethylene imine, for tapes which is printable with flexographic ink. US-A-4,421,817 teaches printable adhesive tapes having a polyolefin supporting member and an anti-adhesive surface of, for example, copolymers of acrylic and methacrylic esters with alcohols, polyurethane resins, lacquers including modified cellulose ethers and esters, polyamide copolymers and cellulose ester-modified polyamide copolymers. These polymers and resins are supplied in organic solvents. US-A-4,587,156 discloses a printable solvent-based release coating composition having a low adhesion backsize of polyvinyl octadecyl carbamate and an ink-anchoring resin of cellulose acetate butyrate with a backsize coating primer of chlorinated polyolefin. US-A-4,599,260 discloses directly printable tapes, ink compositions and printing methods where the backsize coating of the tape is composed of a low adhesion backsize compound of polyvinyl octadecyl carbamate and chlorinated polyolefin and the ink is composed of a conventional ink with an ink adhesion promoter of chlorinated polyolefin.

Due to safety, health and environmental considerations, there has been an increased interest in developing aqueous-based low adhesion coatings which do not compromise release properties. Several patents describe aqueous-based release coatings which can be applied onto hydrophobic films, such as polyester, polypropylene and polyvinyl chloride. US-A-2,607,711 discloses a low adhesion backsize coating made by solution polymerization which can be coated either from a solution or from an aqueous dispersion. US-A-4,342,815 teaches an aqueous long-chain alkyl acrylate backsize composition and the coated film backed pressure sensitive adhesive tapes.

However, these aqueous release coats for hydrophobic films are not printable. In addition, the aqueous compositions generally work well on hydrophilic films, such as for example cellophane, but uniform release properties over time are not achieved.

Printable, aqueous-based release coatings for paper and other fibrous tapes have had limited technical success.

Acrylic emulsions have been used successfully as release coats with rubber-based adhesives on fibrous backings. US-A-3,066,043 discloses a printable, aqueous-based release coating composition for nonwoven fibrous web with tackified natural rubber adhesives comprising a polyvinyl resin and an alkyl acrylate.

US-A-3,067,057 teaches an aqueous, printable release coating for paper tapes comprising a heat-reactive aldehyde or imide resin, an emulsifying agent of a sulfated or sulfonated wetting agent which contains a straight chain $(C_{11}-C_{21})$ alkyl group and a carboxylic acid. These aqueous acrylic release coats, however, do not work well for acrylic-based adhesives.

The present invention seeks to overcome the problems associated with the known adhesive articles.

According to a first aspect of the present invention there is provided an article comprising a backing, at least one pressure sensitive adhesive layer, and an aqueous release coating layer, wherein the pressure sensitive adhesive layer is affixed to at least one side of the backing and wherein the aqueous release coating layer comprises an aqueous solution of water-soluble or water-dispersible poly(alkylene-oxide)-containing polymer.

According to a second aspect of the present invention there is provided the use of a water-soluble or water-dispersible poly(alkylene-oxide)-containing polymer as a release coating for a pressure sensitive adhesive article.

According to a third aspect of the present invention there is provided a method of preparing an adhesive article comprising applying at least one pressure sensitive adhesive layer to a backing of an article and applying an aqueous release coating layer, wherein the aqueous release coating layer is a water-soluble or water-dispersible poly(alkylene-oxide)-containing polymer.

The advantages associated with the present invention are that it provides a pressure sensitive adhesive article which exhibits good bonding properties which are consistent over time and temperature and humidity extremes and fluctuations. Also, the pressure sensitive adhesive article unrolls quietly and without the adhesive transferring to the release-coated backing side when it is unrolled. Also, the pressure sensitive adhesive article utilizes a release coating which is aqueous-based. Also, the pressure sensitive adhesive article is printable. Furthermore, the release coatings of this invention overcome the deficiencies of the existing technology concerning adhesion and release properties while being aqueous-based and directly printable.

3

The present invention is therefore directed to an article comprising a backing layer, at least one pressure sensitive adhesive layer, and an aqueous release coating layer, wherein the pressure sensitive adhesive layer is affixed to at least one side of said backing layer and the aqueous release coating layer comprises an aqueous solution of water-soluble or water-dispersible poly(alkylene oxide)-containing polymer.

With the articles according to the present invention, the pressure sensitive adhesive may be applied to one side of the backing ("adhesive-coated backing side") and the release coat may be applied to the opposite side of the backing ("release-coated backing side") or the pressure sensitive adhesive may be applied to both sides of the backing ("double adhesive-coated backing") and the release coating may be contained in release-coat paper which is subsequently applied to least one adhesive-coated backing side.

Typical examples of the pressure sensitive adhesive articles of this invention include tapes, films and labels.

Typically, the backings of this invention are conventional materials, such as for example plastics including unplasticized polyvinyl chloride, polyethylene, polypropylene, polyester, and other substrates used in self-wound tapes; paper including crepe or flat paper and those used in masking tapes; nonwovens including cellulosics; and the like. Typically the backing thickness is from about 20 $\mu$m to about 40 $\mu$m.

The pressure sensitive adhesives of this invention are conventional materials, such as for example, aqueous acrylic adhesives; solvent-based rubber adhesives including *cis*-1,4-polyisoprene; hot-melt block copolymer adhesives; synthetic rubbers including styrene-butadiene rubber; and the like.

The present applicant has discovered a novel printable, pressure sensitive adhesive article which contains conventional backing materials and conventional pressure sensitive adhesives with a novel release coating composition. The release coatings useful in this invention comprise an aqueous solution of water-soluble or water-dispersible poly(alkylene oxide)-containing polymers, such as for example, polyethylene oxide, polypropylene oxide, and the like. Polymers containing poly($C_2$-$C_8$) alkylene oxide units are preferred. Examples of such polymers and their preparation are disclosed in US-A-4,079,028; US-A-4,155,892; US-A-4,426,485; US-A-4,496,708; US-A-4,499,233; US-A-4,209,333; US-A-4,298,511; US-A-4,327,008; US-A-4,337,184; US-A-4,373,083; US-A-3,770,684; US-A-4,411,819; US-A-2,948,691; US-A-4,304,902; and US-A-4,180,491, including polyglycol esters, polyglycol amides, a trimethylol propane/ethylene oxide adduct capped with octyldecyl isocyanate, a dipentaerythritol/ethylene oxide adduct capped with octyldecyl isocyanate, a trimethylol propane/ethylene oxide adduct reacted with a tolylene diisocyanate polyethylene glycol condensate and capped with octadecanol, a trimethylol propane/ethylene oxide/$C_{36}$ dimer acid diisocyanate/polyethylene glycol condensate capped with octadecyl isocyanate, a polyethylene glycol/4,4'-methylbis (isocyanoatocyclohexane)/ triisocyanate adduct of trimethylol propane and tolylene diisocyanate capped with hexadecanol, a polyethylene glycol/methylenedi-p-phenylene diisocyanate/triisocyanate adduct of trimethylol propane and tolylene diisocyanate condensate capped with eicosanol, a polyethylene glycol/tolylene diisocyanate capped with octadecanol, a polyethylene glycol/trimethylol propane/tolylene diisocyanate condensate capped with octadecanol, a polyethylene glycol/tolylene diisocyanate/ dipentaerythritol condensate capped with octadecanol, and a polyethylene glycol/trimethylol propane/tolylene diisocyanate condensate capped with perfluorododecanol.

Typically, the polymers of this invention contain poly(alkylene oxide) units having a weight-average molecular weight from about 1,000 to about 5,000,000, preferably from 3,000 to about 35,000.

Typically, the release coatings have solids level from about 1% by weight to about 10% by weight, preferably from about 2% by weight to about 5% by weight.

A surfactant may be required in the release coatings for those backings which have a measured surface energy less than about 35 dynes per centimeter. In addition, conventional coating components such as, for example, pigments, binders, vehicles, extenders, dispersants, surfactants, coalescents, wetting agents, rheology modifiers, thickeners, drying retarders, antifoaming agents, colorants, waxes, preservatives, heat stabilizers, ultraviolet light absorbers and the like may be used in the release coating of this invention.

The release coating may be applied to the backing by knife coating, roller coating and print coating. After the release coat is applied to the flexible backing, it may be dried by heating. The dry weights of the release coats which are useful in this invention are from about 0.01 gram per square meter to about 10 grams per square meter according to the selection of backing and pressure-sensitive adhesive and coating technique. Dry weights of the release coats from about 0.1 gram per square meter to about 2.0 grams per square meter are preferred.

The surface energy of the release coat when applied onto the flexible backing must be greater than about 38 dynes per centimeter to permit direct printing with solvent- and aqueous-based printing media. The release coatings of this invention exhibit surface energies greater than about 38 dynes per centimeter and are directly printable with conventional printing inks, including aqueousbased and solvent-based gravure inks and aqueous-based flexographic inks; and the like.

The pressure sensitive adhesive articles of this invention exhibit a superior combination of properties which are demonstrated in the illustrative examples which follow. The pressure sensitive adhesive articles of this invention exhibit good bonding properties which are maintained over time and temperature and humidity extremes and fluctuations. The pressure sensitive adhesive-coated backings unroll quietly and release in an acceptable adhesive release mode when the rolled backings are unwound. Furthermore, the pressure sensitive adhesive articles are directly printable (see for example Example 8 below) and are aqueousbased.

The present invention will now be described by way of example only.

The following is a description of how the tape rolls and samples were prepared for testing and the types of testing used to determine the benefits of the release coating compositions used in the pressure sensitive articles of this invention. All samples were conditioned overnight at 23°C and 50% relative humidity before any testing.

## PREPARATION OF TAPE ROLLS

The tape rolls were prepared from unplasticized polyvinyl chloride film (35 μm thickness) which was coated on the uncoated backing side with a 2%-5% solids solution of the aqueous release coat with a gravure roller with a 96 trihelical cylinder at a line speed of 9.14m/min (40 feet/minute) and dried at 87.8°C (190°F) for 30 seconds.

The final dry coat weights of the release coats were approximately 0.1 grams/square meter.

The pressure sensitive adhesive was then applied on the coated backing side using a 3-roll reverse coater at a line speed of 9.14m/min (40 feet/minute) and dried at 76.7°C (170°F) for one minute. The final dry coat weights of the adhesive were about 25 grams/square meter.

The backings which were then coated on one side with the release coat and the opposite side with pressure sensitive adhesive were rolled such that the release-coated backing side contacted the adhesive-coated backing side.

The rolls were then unwound, slit into 5.08 cm (2-inch) wide strips and then rewound into 7.62 cm (3-inch) diameter cores at a speed of 120 meters/minute to produce the final rolls of tape.

## PREPARATION OF TAPE SAMPLES

The release coats were applied to the backing using either a blade applicator or a hand-held gravure roller. The release-coated backings were then dried at 65.6°C (150°F) for 10 minutes. The final dry weights of the release coats ranged from 0.01 to 1.0 gram/ square meter.

The pressure sensitive adhesives were then applied onto a separate backing strip using a blade applicator adjusted to give a 20 to 24 grams per square meter dry adhesive thickness. The coated backings were then dried at 65.6°C (150°F) for 10 minutes.

The backing containing the release coat was then applied to the backing containing the adhesive such that the release coat and the adhesive were in direct contact to form the tape samples. The tape samples were stored in a controlled environment room at 23°C and 50% relative humidity overnight before testing.

The backings were then cut in strips of 2.54 cm by 20.32 cm (1 inch by 8 inches).

## PEEL ADHESION TEST

An peel adhesion test ("T-peel") was performed on the tape samples in accordance with the Pressure Sensitive Tape Council guidelines (PSTC-1). Using a tensile tester, the force required to peel the backing containing the adhesive from the backing containing the release coat at a 180° angle (T-configuration) was measured. The force required to peel the two backings of the tape samples apart was recorded periodically as the tape samples were aged. The tests were conducted at a separation speed of 30.48 and/or 127 cm/min (12 and/or 50 inches/minute). How the adhesive-coated side of the backing separated from the release-coated side of the backing is described as the release mode. The release modes associated with the peel adhesion test are:

| Release Mode | Designation | Description |
|---|---|---|
| adhesive | A | clean adhesive removal from the release-coated backing |
| cohesive | C | partial adhesive removal from the release-coated backing and partial adhesive transfer to the release-coated backing |
| adhesive failure from backing | AFB | complete adhesive transfer to the release-coated backing |
| mixed | - | some combination of failure modes |

The only acceptable release mode is adhesive release mode.

PRINTABILITY TEST

Printability of the release coated surfaces was measured using a Polytreat® Check Pen from Independent Ink, Inc. set at a level of 38-40 dyne per centimeter. If the release coatings of this invention exhibit a surface energy greater than about 38 dynes per centimeter, they may be printed with solvent- and aqueous-based flexographic and gravure type inks.

EXAMPLE 1: EFFECT OF RELEASE COAT

The effect of the release coat on peel adhesion over time were determined using tape samples prepared according to the procedure descibed above. The results for unplasticized polyvinyl chloride backing with Robond® PS-83D acrylic pressure sensitive adhesive from Rohm and Haas and release coating containing an aqueous solution of water-soluble polymer of about 4 to 6 poly(ethylene oxide) units of a weight average molecular weight of 8,000 connected via diisocyanate linkages (Desmodur® W from Bayer AG) capped with $C_4$-$C_{18}$ hydrophobes are reported in Table 1.1 giving the force in g/cm x 0.089 (ounces/inch) [based on the calculation that 1 ounce/inch is equivalent to 11.16 g/cm] and the type of release mode.

Lower peel adhesion force values and adhesive ("A") type release modes are preferred.

Each of the tape samples which contained a release coat, except for those noted above (Tape Samples 4A and 4B), exhibited a desirable lower adhesion peel force and an acceptable release mode as compared to Tape Sample 1 which contained no release coating.

This trend was repeated over a 90 day ageing period.

## Table 1.1

Peel Adhesion Force
g/cm x 0.089 & release mode
(ounces/inch & release mode)

| Tape Sample | 1 day | 7 days | 14 days | 30 days | 60 days | 90 days |
|---|---|---|---|---|---|---|
| 1* | 23A | 52A/C | 52A/C | 38A/C | --- | 42A/C |
| 2A | 20A | 25A | 26A | 27A | --- | 27A |
| 2B | 20A | 25A | --- | 20A | 21A | 24A |
| 3A | 22A | 27A | 27A | 28A | --- | 30A |
| 3B | 22A | 27A | --- | 18A | 19A | 21A |
| 4A** | 29A | 32A | 35A | 39A/C | --- | 49A/C |
| 4B** | 29A | 32A | --- | 42A/C | 47C | 48C |
| 5 | 14A | 17A | --- | 20A | 21A | 26A |
| 6 | 12A | 12A | --- | 15A | 15A | 20A |

*Note:  Comparative -- no release coating
**Note:    Undesirable failure may be attributed to poor release coating film formation which was spotty and          mottled.

## EXAMPLE 2: EFFECT OF RELEASE COAT WEIGHT

The effect of the release coat weight on peel adhesion over time was determined using tape samples prepared according to the procedure set out above. The results for unplasticized polyvinyl chloride backing (35 $\mu$m thickness) with Robond® PS-83D acrylic pressure sensitive adhesive (25 grams per square meter) from Rohm and Haas and release coatings containing an aqueous solution of water-soluble polymer of about 4 to 6 poly(ethylene oxide) units of a weight average molecular weight of 8,000 connected via diisocyanate linkages (Desmodur® W from Bayer AG) capped with $C_4$-$C_{18}$ hydrophobes are reported in Table 2.1 giving the force in g / cm x 0. 089 (ounces / inch) [based on the calculation that 1 ounce/inch is equivalent to 11.16 g/cm] and the type of release mode.

The peel adhesion force decreased with increasing release coating weight, with the exception of release coating weight of 0.75 (Tape Sample 12C) and 1.00 $g/m^2$ (Tape Sample 12D) upon ageing to 30 days. All of the release coat failures, with the exception of Tape Samples 12C and 12D upon ageing to 30 days, were of an acceptable adhesive release mode.

## Table 2.1

Peel Adhesion Force
g/cm x 0.089 & release mode
(ounces/inch & release mode)

| Tape Sample | Release Coating Weight (g/m²) | 1 day | 7 days | 30 days |
|---|---|---|---|---|
| 10A | 0.25 | 13A | 19A | 20A |
| 10B | 0.50 | 13A | 19A | 20A |
| 10C | 0.75 | 13A | 17A | 20A |
| 10D | 1.00 | 12A | 16A | 20A |
| 11A | 0.25 | 14A | 18A | 19A |
| 11B | 0.50 | 13A | 17A | 19A |
| 11C | 0.75 | 12A | 15A | 17A |
| 11D | 1.00 | 11A | 14A | 16A |
| 12A | 0.25 | 14A | 23A | 29A |
| 12B | 0.50 | 13A | 27A | 37A |
| 12C | 0.75 | 12A | 30A | 46A/C |
| 12D | 1.00 | 11A | 31A | 47A/C |
| 13A | 0.25 | 15A | 17A | 20A |
| 13B | 0.50 | 14A | 18A | 20A |
| 13C | 0.75 | 14A | 18A | 20A |
| 13D | 1.00 | 14A | 18A | 19A |
| 14A | 0.25 | 14A | 15A | 16A |
| 14B | 0.50 | 12A | 12A | 15A |
| 14C | 0.75 | 11A | 12A | 14A |

## EXAMPLE 3: EFFECT OF MOLECULAR WEIGHT

The effect of the molecular weight of the poly(ethylene oxide)-containing polymers of the aqueous release coatings of this invention was evaluated. The tape samples were prepared according to the procedure as set out above. The rolls of tape (5.08 cm (2 inches wide)) were then unrolled, contacted with the release coated paper and cut into 25.4 - 30.5 cm (10-12 inch) strips. These tape samples were then aged 1 day, 7 days, 30 days and 60 days. The adhesion peel force was measured on a tensile tester at a separation rate of 127 cm/min (50 inches/minute). The results are reported in Table 3.1. Again the results are reported in g/cm x 0.089 (ounces/inch) [based on the calculation that 1 ounce/inch is equivalent to 11.16 g/cm].

Failure occurred after 60 days with Tape Sample 15 which was not coated with a release coating. The tape samples coated with the varying molecular weight release coatings (Tape Samples 16-26) all released cleanly (adhesive release mode) and maintained low adhesion peel force over the 60 day ageing period.

## Table 3.1

### Peel Adhesion Force
### g/cm x 0.089 & release mode
### (ounces/inch & release mode)

| Tape Sample | Polymer Molecular Weight | 1 day | 7 days | 30 days | 60 days |
|---|---|---|---|---|---|
| 15* | no release coating | 37A | 37A | 28A | 43A/C |
| 16 | 1000 | 34A | 28A | 32A | 28A |
| 17 | 2000 | 17A | 10A | 25A | 17A |
| 18 | 3350 | 18A | 13A | 17A | 21A |
| 19 | 8000 | 10A | 12A | 22A | 19A |
| 20 | 10000 | 20A | 16A | 19A | 22A |
| 21 | 20000 | 21A | 18A | 21A | 22A |
| 22 | 35000 | 17A | 18A | 24A | 25A |
| 23 | 100000 | 15A | 17A | 21A | 23A |
| 24 | 300000 | 19A | 21A | 22A | 27A |
| 25 | 900000 | 20A | 19A | 26A | 24A |
| 26 | 5000000 | 27A | 25A | 23A | 29A |

*Note: Comparative -- no release coating

EXAMPLE 4: EFFECT OF ACCELERATED AGEING

Accelerated ageing testing was carried out under high heat and/or humidity conditions. The tape rolls were prepared according to the procedure set out above. The rolls of tape (5.08 cm (2 inches wide)) were then unrolled, contacted with the release coat paper and cut into 25.4 - 30.5 cm (10-12 inch) strips. These tape samples were then aged under various heat and humidity conditions for 1 hour, 2 hours, 6 hours, 1 day and 7 days. All tapes were allowed to equilibrate overnight at 23°C and 50% relative humidity. The adhesion peel force was measured on a tensile tester at a separation rate of 127 cm/min (50 inches/minute). The results are reported in Table 4.1. Again the results are reported in g/cm x 0.089 (ounces/inch) [based on the calculation that 1 ounce/inch is equivalent to 11.16 g/cm]. Failure occurred within 7 days with the tape samples containing release coating (Tape Samples 27A, 28A, 29A). The tape samples containing release coating (Tape Sample 27B, 28B, 29B) all released cleanly (adhesive release mode) and maintained desirable lower adhesion peel force over the 7 day ageing period.

9

## Table 4.1

Peel Adhesion Force

g/cm x 0.089  & release mode

(ounces/inch  &  release  mode)

| Tape Sample | Temperature (°C) | % Relative Humidity | 1 hour | 2 hours | 6 hours | 1 day | 7 days |
|---|---|---|---|---|---|---|---|
| 27A* | 23 | 50 | 29A | 33A | 33A | 36A | 35A/C |
| 27B | 23 | 50 | 16A | 18A | 17A | 22A | 24A/C |
| 28A* | 50 | 0 | 39A | 38A/C | 36A | 37A | 36A |
| 28B | 50 | 0 | 19A | 19A | 18A | 25A | 28A |
| 29A* | 40 | 90 | 38A/C | 35A/C | 44A/C | 40A | 44A/C |
| 29B | 40 | 90 | 20A | 19A | 20A | 22A | 21A |

*Note: Comparatives -- no release coating

## EXAMPLE 5: EFFECT OF PRESSURE SENSITIVE ADHESIVE

The utility of the aqueous release coats of this invention was evaluated with different types of pressure sensitive adhesives. Crepe paper backing (Shuford Mills 26 pound saturated crepe paper) was coated with release coatings containing an aqueous solution of water-soluble polymer of about 4 to 6 poly(ethylene oxide) units of a weight average molecular weight of 8,000 connected via diisocyanate linkages (Desmodur® W from Bayer AG) capped with a C10 hydrophobe at a level of 2 grams/square meter and dried at 65.5°C (150°F) for 10 minutes. The following oriented polypropylene backing coated with three different types of pressure sensitive adhesives were used:

(1) aqueous acrylic (Devon® 129 from Devon Tape)

(2) solvent rubber (Beiersdorf Tesa)

(3) hot melt block copolymer (Highland® 371 from 3M)

The release-coated side of the crepe paper backing was then applied to the adhesive coated side of the oriented polypropylene backing. These tape samples were then aged 1 day, 7 days and 30 days.

The adhesion peel force was measured on a tensile tester at a separation rate of 127 cm/min (50 inches/minute). The control was crepe paper backing with no release coat. The results are reported in Table 5.1. Again the results are reported in g/cm x 0.089 (ounces/inch) [based on the calculation that 1 ounce/inch is equivalent to 11.16 g/cm].

Failure occurred after 7 days with all of the tape samples containing the three types of adhesives but not containing the release coating (Tape Samples 30A, 31A, 32A). The tape samples containing the release coating (Tape Samples 30B, 31B, 32B) all released cleanly (adhesive release mode) and maintained desirable lower adhesion peel force over the 30 day ageing period.

## Table 5.1

## Peel Adhesion Force
## g/cm x 0.089  & release mode
## (ounces/inch & release mode)

| Tape Sample | Adhesive | 1 day | 7 days | 30 days |
|---|---|---|---|---|
| 30A* | aqueous acrylic | 9A | 15C | 13C |
| 30B | aqueous acrylic | 3A | 3A | 5A |
| 31A* | solvent rubber | 13A | 16C/AFB | 11A/C |
| 31B | solvent rubber | 8A | 7A | 7A |
| 32A* | hot melt | 20A | 32C/AFB | 30A/C |
| 32B | hot melt | 8A | 4A | 7A |

*Note:Comparatives -- no release coatings

EXAMPLE 6: EFFECT OF BACKING

The utility of the aqueous release coats of this invention was evaluated with different types of backings. Four different types of backings were evaluated:
(1) crepe paper (26 pound saturated from Shuford Mills)
(2) oriented polypropylene ("OPP") (Mobil)
(3) polyethylene terephthalate ("PET") (Mylar® D from duPont)
(4) unplasticized polyvinyl chloride ("UPVC")(Hoechst-Kalle Films).
Robond® PS-83D acrylic pressure sensitive adhesive from Rohm and Haas was applied to each type of backing at a level of 24 gram per square meters and dried 65.5°C (150°F) for 10 minutes. Release coating containing an aqueous solution of water-soluble polymer of about 4 to 6 poly(ethylene oxide) units of a weight average molecular weight of 8,000 connected via diisocyanate linkages (Desmodur® W from Bayer AG) capped with a $C_{10}$ hydrophobe was applied to crepe paper at a level of 0.5 grams per square meter and dried at 65.5°C (150°F) for 10 minutes. The release-coated side of the crepe paper backing was then applied to the adhesive-coated side of the different types of backings. These tape samples were then aged 1 day, 7 days and 30 days. The adhesion peel force was measured on a tensile tester at a separation rate of 127 cm/min (50 inches/minute). The control was crepe paper backing with no release coat. The results are reported in Table 6.1. Again the results are reported in g/cm x 0.089 (ounces/inch) [based on the calculation that 1 ounce/inch is equivalent to 11.16 g/cm].

Failure occurred after 1 day with all of the tape samples containing different backings but not containing the release coating (Tape Samples 33A, 34A, 35A, 36A). The tape samples containing the release coating all released cleanly (adhesive release mode) and maintained desirable lower adhesion peel force over the 30 day ageing period (Tape Samples 33B, 34B, 35B, 36B).

11

## Table 6.1

| | Peel Adhesion Force g/cm x 0.089 & release mode (ounces/inch & release mode) | | | |
|---|---|---|---|---|
| Tape Sample | Backing | 1 day | 7 days | 30 days |
| 33A* | crepe paper | 29C | 30C | 42C |
| 33B** | crepe paper | 9A | 24A | 20A |
| 34A* | OPP | 28AFB/C | 22A/AFB | 29C/ AFB |
| 34B** | OPP | 16A | 21A | 24A |
| 35A* | PET | 31A/AFB | 20AFB | 31AFB |
| 35B** | PET | 12A | 17A | 22A |
| 36A* | UPVC | 23A | 52A/C | 38A/C |
| 36B** | UPVC | 20A | 25A | 27A |

*Note:     Comparatives -- no release coatings

**Note:     Release coating has been formulated with an anionic surfactant (Triton® GR-5M from Rohm and Haas) at a level of 0.1-0.3% by weight to improve wet-out.

EXAMPLE 7: UNWIND ADHESION TEST

The unwind adhesion test was performed on the rolls of tape in accordance with the Pressure Sensitive Tape Council guidelines (PSTC-8) prepared according to the procedure set out above. The test measures the force required to unwind the roll of tape at a 90° angle using a tensile tester. This test demonstrates the relative ease of unwinding a rolled backing which contains a release coating compared to a rolled backing which does not contain a release coating. The test was conducted at a separation rate of 127 cm/min (50 inches/minute). The results are reported in Table 7.1. Again the results are reported in g/cm x 0.089 (ounces/inch) [based on the calculation that 1 ounce / inch is equivalent to 11.16 g/cm].

Tape Sample 37 unrolled with difficulty, accompanied by unacceptable cohesive release mode or mixed release mode. Tape Sample 38 showed acceptable clean adhesive release mode with unwind force values similar to Tape Sample 39 (solvent-based rubber adhesive). The desirable, lower unwind force and acceptable clean adhesive release mode of Tape Sample 39 remained stable over 240 days.

## Table 7.1

| Unwind Force g/cm x 0.089 & release mode (ounces/inch & release mode) | | | | | |
|---|---|---|---|---|---|
| Tape Sample | Adhesive | 1 day | 7 days | 30 days | 60 days | 240 days |
| 37* | acrylic | 70C | 60A/C | 77A | 73A/C | 81A/C |
| 38** | acrylic | 29A | 26A | 31A | 28A | 32A |
| 39* | solvent-based rubber | 34A | 30A | 27A | 30A | 34A |

*Note:     Comparatives -- no release coatings

### EXAMPLE 8: PRINTABILITY TEST

Printability of the release coated surfaces was measured using a Polytreat® Check Pen from Independent Ink, Inc. set at a level of 38-40 dyne per centimeter. The release coats of this invention exhibited surface energies greater than about 38 dynes per centimeter and were directly printable.

In summation, in Examples 1 and 7, the tape samples and rolls with no release coating and with release coatings containing an aqueous solution of water-soluble poly(ethylene oxide) units of a weight average molecular weight of 8,000 connected via diisocyanate linkages (Desmodur® W from Bayer AG) capped with $C_4$-$C_{18}$ hydrophobes were tested. Those tape samples containing release coating maintained a lower adhesion peel force determined intermittently compared to the test specimens containing no release coating over the 90 day testing period for the tape sample and over 240 days for the tape roll.

In Example 2, the level of release coating was varied. The results show that adhesion peel force was inversely proportional to the release coating level and that the tape samples containing release coating exhibited acceptable adhesive release mode. These trends were maintained over the 30 day testing period.

In Example 3, the weight-average molecular weight of water-soluble or waterdispersible poly(alkylene oxide)-containing polymers was varied. The results show that the adhesion peel force was lower for those tapes samples which contained release coatings of weight-average molecular weight from about 1,000 to about 5,000,000 than for the tape sample containing no release coating. The tape samples containing release coating exhibited acceptable adhesive release mode. The trends were also maintained over a 60 day testing period.

The pressure sensitive adhesive articles of this invention may be stored extended periods of time and under severe environmental conditions.

In order to gauge the stability of the pressure sensitive adhesive article over time, temperature and humidity fluctuations and extremes, accelerated ageing testing was completed (see Example 4). After the test samples were prepared, they were aged for 1 hour, 2 hours, 6 hours, 1 day and 7 days at condition I (ambient -- 23°C and 50% relative humidity); condition II (hot and dry -- 50°C and 0% relative humidity); and condition III (hot and wet -- 40°C and 90% relative humidity). Under all three accelerated testing conditions, failure occurred within 7 days with the tape samples containing no release coating. The tape samples containing the release coating of this invention all released cleanly (adhesive release mode) and maintained lower adhesion peel force over the 7 day ageing period.

In Example 5, the effect of the type of pressure sensitive adhesive was determined. The results show that the adhesion peel force was lower for each type of pressure sensitive adhesive tested in the tape samples containing release coating than the tapes samples containing no release coating. The tape samples containing release coating exhibited acceptable adhesive release mode and the tape samples containing no release coating exhibited unacceptable cohesive release, adhesive failure from the backing and mixed release mode. The trends were also maintained over a 30 day testing period.

In Example 6, the effect of the type of backing was determined. The results show that the adhesion peel force was lower for each type of backing tested in the tape samples containing release coating than the tapes samples containing no release coating. The tape samples containing release coating exhibited acceptable adhesive release mode and the tape samples containing no release coating exhibited unacceptable cohesive release mode, adhesive failure release mode and mixed release mode. The trends were also maintained over a 30 day testing period.

The release coatings of this invention containing water-soluble or waterdispersible poly(alkylene oxide)-containing polymer all exhibited surface energies greater than about 38 dynes per centimeter and were directly printable.

## Claims

1. An article comprising a backing; at least one pressure sensitive adhesive layer; and an aqueous release coating layer;

   wherein the pressure sensitive adhesive layer is affixed to at least one side of the backing; and

   wherein the aqueous release coating layer comprises an aqueous solution of water-soluble or water-dispersible poly(alkylene-oxide)-containing polymer.

2. An article according to claim 1 wherein the poly(alkylene oxide) portion of the water-soluble or water-dispersible poly(alkylene oxide)-containing polymer has a molecular weight from about 1,000 to about 5,000,000.

3. An article according to claim 1 or claim 2 wherein the aqueous solution of the water-soluble or water-dispersible poly(alkylene-oxide)-containing polymer has a solids level from about 1% by weight to about 10% by weight.

4. An article according to any one of the preceding claims wherein a pressure sensitive adhesive layer affixed to each side of the backing and at least one release coat paper layer is in contact with each pressure sensitive adhesive layer.

5. Use of a water-soluble or water-dispersible poly(alkylene-oxide)-containing polymer as a release coating for a pressure sensitive adhesive article.

6. A method of preparing an adhesive article comprising applying at least one pressure sensitive adhesive layer to a backing of an article and applying an aqueous release coating layer, wherein the aqueous release coating layer is a water-soluble or water-dispersible poly(alkylene-oxide)-containing polymer.

European Patent Office

# EUROPEAN SEARCH REPORT

Application Number

EP    92 30 6094

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 166 150 (JOHN A. MATTOR) 28 August 1979 * claims 1-11,22 * | 1,2,5,6 | C09J7/02 |
| X | GB-A-1 541 311 (UNITED MERCHANTS & MANUFACTURERS INC.) * page 12, paragraph 3; claim 1 * | 1,5,6 | |

TECHNICAL FIELDS SEARCHED (Int. Cl.5 )

C09J

The present search report has been drawn up for all claims

| Place of search | Date of completion of the search | Examiner |
|---|---|---|
| THE HAGUE | 14 OCTOBER 1992 | GIRARD Y.A. |